# FASCICULE DE BREVET EUROPEEN

(11) **EP 1 427 960 B1**
(45) Date de publication et mention de la délivrance du brevet: **24.01.2007**
(21) Numéro de dépôt: 02798761.9
(22) Date de dépôt: 12.09.2002
(51) Int. Cl.: F16L 37/084

(54) **DISPOSITIF DE RACCORDEMENT A MONTAGE SECURISE**
VERBINDUNGSVORRICHTUNG MIT SICHERER BEFESTIGUNG
CONNECTING DEVICE WITH SECURE MOUNTING

(30) Priorité: 20.09.2001 FR 0112148
(43) Date de publication de la demande: 16.06.2004
(73) Titulaire: LEGRIS SA, 35000 Rennes (FR)
(72) Inventeur: LEGEAY, Olivier, F-35131 Chartres de Bretagne (FR)
(74) Mandataire: Lavialle, Bruno François Stéphane
(86) Numéro de dépôt international: PCT/FR2002/003107
(87) Numéro de publication internationale: WO 2003/025443

(56) Documents cités:
- EP-A- 0 448 790
- WO-A1-96/22487
- GB-A- 2 258 900
- US-A- 4 834 423
- US-A- 4 943 091

## Description

La présente invention concerne un dispositif de raccordement d'une extrémité de conduite à un alésage ménagé dans un élément d'un circuit de transport de fluide. Cet élément peut être un élément émetteur de fluide tel qu'une pompe, ou un élément récepteur de fluide tel qu'une autre conduite, un réservoir...

Un dispositif de raccordement de ce type (voir, par exemple, le document WO-A-96/22487) comprend généralement un corps tubulaire définissant un canal interne pour accueillir l'extrémité de conduite. L'extrémité de conduite est maintenue selon une position axiale prédéterminée dans le canal interne du corps tubulaire par l'intermédiaire de moyens de retenue tels qu'une rondelle à griffes déformables destinées à venir mordre la surface externe de l'extrémité de conduite ou un verrou mobile radialement entre une position en saillie dans laquelle le verrou peut être engagé derrière une collerette solidaire de l'extrémité de conduite pour s'opposer à tout retrait de celle-ci hors du canal interne du corps tubulaire, et une position escamotée dans laquelle le verrou est dégagé de la collerette.

Le dispositif de raccordement comprend en outre des moyens de fixation du corps tubulaire du dispositif de raccordement dans l'alésage de l'élément selon une position axiale prédéterminée. Le corps tubulaire peut par exemple être vissé dans l'alésage de l'élément ou être emmanché à force dans celui-ci. Dans le dernier cas, le corps tubulaire peut être par exemple pourvu extérieurement de reliefs de cramponnage pour améliorer sa fixation dans l'alésage. La position axiale prédéterminée correspond à une position pour laquelle la résistance de la fixation est optimale et/ou une position dans laquelle le corps tubulaire peut coopérer avec des éléments d'étanchéité. De tels moyens de fixation sont dissociés des moyens de retenue tels que les rondelles à griffes ou les verrous mobiles radialement, c'est-à-dire que ces moyens fonctionnent de façon indépendante et une extrémité de conduite peut être retenue dans le corps tubulaire alors même que celui-ci n'est pas correctement fixé dans l'alésage. Lorsque les moyens de fixation du corps tubulaire dans l'alésage sont dissociés des moyens de retenue de l'extrémité de conduite dans le corps tubulaire, il n'existe actuellement aucun autre moyen qu'un contrôle visuel pour vérifier que le corps tubulaire est correctement monté dans l'alésage de l'élément de circuit. Il en résulte un risque qu'un opérateur ne s'aperçoive pas que le corps tubulaire n'est pas monté correctement. Lors de la mise sous pression du circuit, il existe un risque de fuite et, plus dangereux, d'expulsion du corps tubulaire hors de l'alésage (effet coup de fouet).

Il existe donc un besoin non résolu de manière commode à ce jour d'un dispositif de raccordement du type précité qui puisse être monté de manière sécurisée.

A cet effet, on prévoit, selon l'invention, un dispositif de raccordement d'une extrémité de conduite à un alésage ménagé dans un élément de circuit de transport de fluide, le dispositif comprenant un corps tubulaire définissant un canal interne pour accueillir l'extrémité de conduite, des moyens de retenue de l'extrémité de conduite selon une position axiale prédéterminée dans le canal interne et des moyens de fixation du corps tubulaire dans l'alésage selon une position axiale prédéterminée, les moyens de fixation du corps tubulaire étant dissociés des moyens de retenue de l'extrémité de conduite. Des moyens de butée de la face terminale de l'extrémité de conduite sont montés sur le corps tubulaire pour être mobiles entre une position en saillie dans le canal interne de manière à s'opposer à l'enfoncement de l'extrémité de conduite jusqu'à sa position axiale prédéterminée et une position escamotée de manière à libérer le passage de l'extrémité de conduite vers sa position axiale prédéterminée, et les moyens de butée sont agencés pour coopérer avec l'élément de telle façon qu'ils passent de leur position en saillie à leur position escamotée lorsque le corps tubulaire est enfoncé dans l'alésage jusqu'à sa position axiale prédéterminée.

Ainsi, lorsque le corps tubulaire n'est pas correctement disposé dans l'alésage de l'élément de circuit, l'extrémité de conduite ne peut être engagée dans le canal interne jusqu'à sa position axiale prédéterminée et ne peut donc être assujettie au corps tubulaire. L'impossibilité de réaliser la connexion constitue donc un signal avertissant l'utilisateur que le corps tubulaire n'est pas correctement mis en place.

Selon un mode de réalisation particulier, les moyens de butée comprennent au moins une lamelle ayant une extrémité reliée au corps tubulaire pour être déformable élastiquement entre un état déformé dans lequel la lamelle a une extrémité libre en saillie dans le canal interne et un état de repos dans lequel la lamelle a son extrémité libre escamotée.

Avantageusement alors, la lamelle est pourvue d'un ressaut adjacent à son extrémité libre et en saillie vers l'extérieur du corps tubulaire pour coopérer avec une surface de l'alésage, l'alésage comportant un renfoncement pour accueillir le ressaut lorsque le corps tubulaire est dans sa position axiale prédéterminée.

Si le corps tubulaire n'est pas correctement monté dans l'alésage de l'élément de circuit et qu'une extrémité de conduite est introduite dans le corps tubulaire, le mouvement d'introduction de l'extrémité de conduite dans le canal interne amène l'extrémité de conduite au contact de l'extrémité libre de la lamelle de sorte que, si le mouvement d'introduction de l'extrémité de conduite se poursuit, l'extrémité de conduite entraîne le corps tubulaire dans l'alésage jusqu'à ce que le ressaut arrive en regard du renfoncement de l'alésage. L'extrémité libre revenant dans son état de repos est alors escamotée du canal interne libérant le passage de l'extrémité de conduite vers sa position axiale prédéterminée.

De préférence encore, le ressaut possède une surface radiale formant un épaulement pour coopérer avec une surface radiale correspondante du renfoncement et s'opposer à un effort d'extraction du corps tubulaire hors de l'alésage.

Ainsi, le ressaut permet la réalisation d'une fixation par encliquetage du corps tubulaire dans l'alésage.

D'autres caractéristiques et avantages de l'invention ressortiront à la lecture de la description qui suit d'un mode de réalisation particulier non limitatif de l'invention.

Il sera fait référence aux dessins annexés, parmi lesquels :

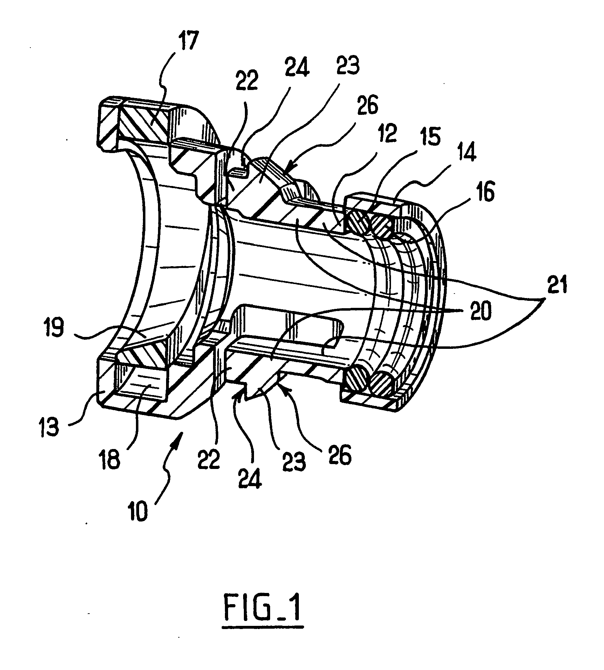

- la figure 1 est une vue en perspective et en coupe longitudinale d'un dispositif de raccordement conforme à l'invention,
- la figure 2 est une vue analogue à la figure 1 d'un dispositif de raccordement incorrectement monté, lors de l'introduction d'une extrémité de conduite dans celui-ci,
- la figure 3 est une vue analogue à la figure 2 du dispositif de raccordement, une fois l'extrémité de conduite introduite dans celui-ci.

En référence aux figures, le dispositif de raccordement ici décrit est destiné à permettre la liaison entre une extrémité de conduite 1 pourvue extérieurement d'une collerette 2 à un alésage 3 d'un élément 4 d'un circuit de transport de fluide, tel qu'un élément récepteur de fluide comme un réservoir ou un élément émetteur de fluide comme une pompe.

L'alésage 3 débouche à l'extérieur par deux chambrages consécutifs de diamètres croissant, à savoir un chambrage intermédiaire 5 et un chambrage d'entrée 6. Un épaulement 7 forme la transition entre le chambrage d'entrée 6 et le chambrage intermédiaire 5 tandis qu'un épaulement 8 forme la transition entre le chambrage intermédiaire 5 et la section nominale de l'alésage 3. L'alésage 3 comporte deux renfoncements formés de lumières 9 diamétralement opposées ménagées dans le chambrage d'entrée 6 pour déboucher à l'extérieur de l'élément 4.

Le dispositif de raccordement conforme à l'invention comprend un corps tubulaire généralement désigné en 10 qui délimite un canal interne 11 pour accueillir l'extrémité de conduite 1 et possède une extrémité 12 par laquelle le corps tubulaire 10 est destiné à être introduit dans l'alésage 3 de l'élément 4 et, à l'opposé, une extrémité 13 par laquelle l'extrémité de conduite 1 est destinée à être introduite dans le canal interne 11.

L'extrémité 12 est équipée d'une douille 14 qui forme un support pour des éléments d'étanchéité 15 et 16 (des joints toriques) ayant un diamètre intérieur qui correspond à un diamètre extérieur de l'extrémité de conduite 1 et un diamètre extérieur correspondant à un diamètre intérieur de la douille 14 lui-même correspondant sensiblement à un diamètre extérieur de l'extrémité 12 du corps tubulaire 10 et à un diamètre intérieur du chambrage intermédiaire 5. La douille 14 a un diamètre extérieur correspondant à un diamètre intérieur du chambrage d'entrée 6. La douille 14 est reliée à l'extrémité 12 du corps tubulaire 10 par une liaison à rupture (un voile frangible) qui cède sous un effort axial de compression.

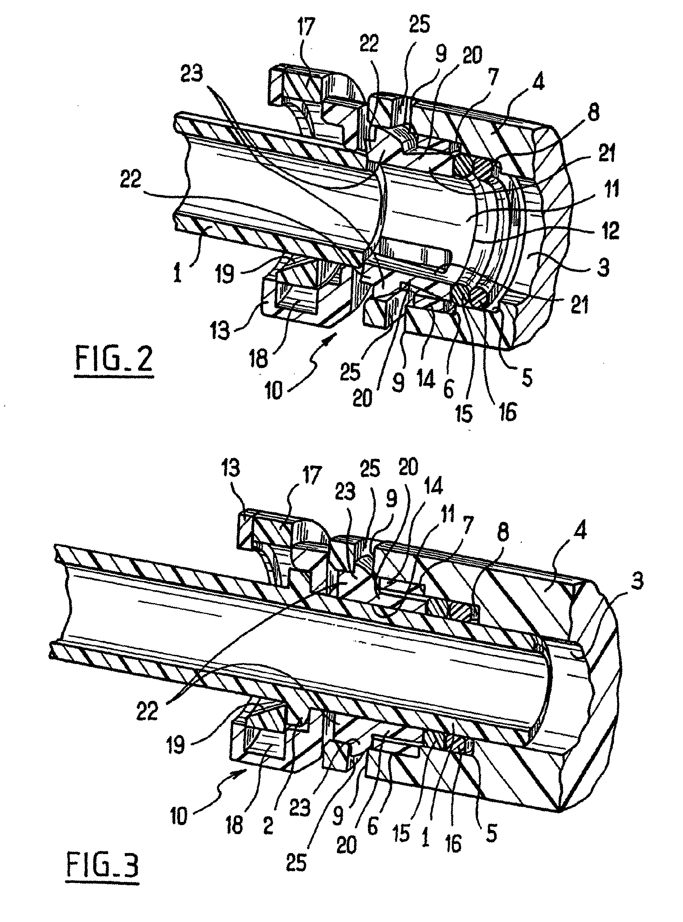

L'extrémité 13 du corps tubulaire 10 est conformée pour contenir un verrou en forme de bague 17 qui, de manière connue, forme un obstacle transversalement escamotable pour la collerette extérieure 2 de l'extrémité de conduite 1. L'extrémité 13 comporte ainsi un chambrage 18 dans lequel débouche le canal interne 11, recevant la bague 17 qui, à l'état de repos, est repoussée par des pattes élastiques non visibles sur les figures de sorte que la bague 17 est désaxée par rapport au canal interne 11. La partie la plus interne du chambrage 18 forme un logement pour la collerette 2 de l'extrémité de conduite 1 dans laquelle elle est retenue axialement par la bague 17 dans son état de repos, définissant ainsi une position axiale de retenue de l'extrémité de conduite 1 dans le canal interne 11 (voir la figure 3). On comprend qu'au passage de la collerette 2, la bague 17 s'efface (vers le bas sur les figures) grâce à une pente 19 pour être coaxiale au canal interne 11 puis retrouve sa position de repos sous l'effet des pattes élastiques de rappel après que la collerette 2 a dépassé la bague 17. Pour déverrouiller le dispositif de raccordement, l'opérateur doit appuyer sur la bague 17 à l'encontre des pattes élastiques pour libérer axialement la collerette du chambrage 18.

Le corps tubulaire 10 comprend en outre des moyens de butée de la face terminale de l'extrémité de conduite 1. Les moyens de butée comprennent deux lamelles 20 s'étendant axialement dans le corps tubulaire en des positions diamètralement opposées et ayant une extrémité 21 reliée au corps tubulaire 10 et, à l'opposé, une extrémité libre 22. Les lamelles 20 sont déformables élastiquement entre un état déformé dans lequel l'extrémité libre 22 est en saillie dans le canal interne 11 et un état de repos dans lequel l'extrémité libre 22 est escamotée. Les lamelles 20 sont pourvues du côté de leur extrémité libre 22 d'un ressaut 23 en saillie vers l'extérieur du corps tubulaire 10. La distance séparant les ressauts 23 est supérieure au diamètre intérieur du chambrage d'entrée 6 lorsque les lamelles 20 sont dans leur état de repos et sensiblement égale au diamètre interne du chambrage d'entrée 6 lorsque les lamelles 20 sont dans leur état en saillie.

Chaque ressaut 23 possède d'une part, à l'arrière par rapport à un sens d'introduction du corps tubulaire 1 dans l'alésage 3, une surface radiale 24 pour former un épaulement destiné à coopérer avec une surface radiale 25 correspondante de la lumière 9 de manière à s'opposer à un effort d'extraction du corps tubulaire 10 hors de l'alésage 3 et, d'autre part, à l'avant, une surface inclinée formant une rampe 26 destinée à coopérer avec le bord du chambrage d'entrée 6 de l'alésage 3 pour amener la lamelle 20 dans son état déformé (ce bord peut d'ailleurs être chanfreiné pour faciliter cette coopération). Les lumières 9 et les ressauts 23 forment ainsi des moyens de fixation du corps tubulaire par encliquetage dans l'alésage 3.

L'assemblage du dispositif de raccordement à l'élément 4 consiste à encliqueter le corps tubulaire 10 dans l'alésage 3 de l'élément 4. Le corps tubulaire 10 est introduit dans l'alésage 3 par son extrémité 12 de telle manière que les rampes 26 des ressauts 23 en venant au contact du bord du chambrage d'entrée 6 de l'alésage 3 de l'élément 4 provoquent la déformation des lamelles 20 de leur état de repos à leur état déformé. Les extrémités libres 22 des lamelles 20 sont alors en saillie dans le canal interne 11. On constate à la figure 2 qu'à ce stade si l'extrémité de conduite 1 est engagée dans le corps tubulaire 10, sa face terminale vient en butée des extrémités libres 22 des lamelles 20. La distance entre les extrémités libres 22 et la bague 17 est inférieure à celle séparant la collerette 2 de la face terminale de l'extrémité de conduite 1 de telle manière que la retenue de la conduite par la bague 17 ne soit pas possible tant que les lamelles 20 sont dans leur état déformé. L'opérateur est donc informé que le montage du corps tubulaire 10 dans l'alésage est inachevé.

Le mouvement d'introduction du corps tubulaire 10 dans l'alésage 3 se poursuivant (sous l'action de l'opérateur manipulant soit le corps tubulaire 10 lui-même lorsque l'extrémité de conduite 1 n'est pas engagée, soit l'extrémité de conduite 1 en appui contre les extrémités libres 22 au cours de son introduction dans le corps tubulaire 10), les ressauts 23 arrivent en regard des lumières 9 de sorte que les lamelles 20 peuvent revenir élastiquement dans leur état de repos. Les ressauts 23 logés dans les lumières 9 s'opposent alors à tout effort d'extraction du corps tubulaire 10 hors de l'alésage 3, définissant de la sorte une position axiale de fixation du corps tubulaire 10 dans l'alésage 3. On peut prévoir des moyens d'indexation du corps tubulaire 10 par rapport à l'alésage 3 pour s'assurer que les ressauts 23 sont alignés avec les lumières 9 lorsque le corps tubulaire 10 atteint sa position axiale de fixation. Sinon, les ressauts peuvent être mis en regard des lumières 9 en faisant pivoter le corps tubulaire 10 dans l'alésage 3. En outre, les lumières 9 peuvent être remplacées par une gorge, supprimant la nécessité d'une indexation.

Durant le mouvement d'introduction du corps tubulaire 10 dans l'alésage 3, la douille 17 se détache en rencontrant l'épaulement 8 et est ramenée sur l'extrémité 12. Dans cet état, le chambrage intermédiaire 5 reçoit les deux joints toriques 15, 16.

A la figure 3, on voit l'extrémité de conduite 1 assujettie dans le corps tubulaire 10 et engagée dans le canal interne 11 de celui-ci. La longueur de l'extrémité de conduite 1 au-delà de la collerette 2 est telle que l'extrémité de conduite 1 atteint, dans sa position de retenue dans le corps tubulaire 10, les joints toriques 15, 16.

On remarquera en outre que les lumières 9 formant les renfoncements permettent d'accéder aux ressauts 23 et, en l'absence d'une extrémité de conduite 1 engagée dans le corps tubulaire 10, d'enfoncer au moyen d'un outil les ressauts 23 pour permettre l'extraction du corps tubulaire 10 hors de l'alésage 3.

Bien entendu, l'invention n'est pas limitée au mode de réalisation décrit et on peut y apporter des variantes de réalisation sans sortir du cadre de l'invention tel que défini par les revendications.

En particulier, d'autres modes de fixation que l'encliquetage sont envisageables.

De plus, les moyens de fixation peuvent être dissociés des moyens de butée.

Par ailleurs, les moyens de retenue peuvent être différents de ceux décrits et comprendre par exemple une rondelle à griffes disposée en aval des moyens de butée de manière que ceux-ci empêchent ou libèrent l'accès de l'extrémité de conduite à la rondelle selon qu'ils sont dans leur position en saillie ou dans leur position escamotée.

## Revendications

1. Dispositif de raccordement d'une extrémité de conduite (1) à un alésage (3) ménagé dans un élément de circuit de transport de fluide (4), le dispositif comprenant un corps tubulaire (10) définissant un canal interne (11) pour accueillir l'extrémité de conduite, des moyens (17) de retenue de l'extrémité de conduite selon une position axiale prédéterminée dans le canal interne et des moyens (23) de fixation du corps tubulaire dans l'alésage selon une position axiale prédéterminée, les moyens de fixation du corps tubulaire étant dissociés des moyens de retenue de l'extrémité de conduite, **caractérisé en ce que** des moyens (22) de butée de la face terminale de l'extrémité de conduite sont montés sur le corps tubulaire pour être mobiles entre une position en saillie dans le canal interne de manière à s'opposer à l'enfoncement de l'extrémité de conduite jusqu'à sa position axiale prédéterminée et une position escamotée de manière à libérer le passage de l'extrémité de conduite vers sa position axiale prédéterminée, et **en ce que** les moyens de butée (22) sont agencés pour coopérer avec l'élément de telle façon qu'ils passent de leur position en saillie à leur position escamotée lorsque le corps tubulaire est enfoncé dans l'alésage jusqu'à sa position axiale prédéterminée.

2. Dispositif selon la revendication 1, dans lequel les moyens de butée comprennent au moins une lamelle (20) ayant une extrémité (21) reliée au corps tubulaire (10) pour être déformable élastiquement entre un état déformé dans lequel la lamelle a une extrémité libre (22) en saillie dans le canal interne (11) et un état de repos dans lequel la lamelle a son extrémité libre escamotée.

3. Dispositif selon la revendication 2, dans lequel la lamelle (20) est pourvue d'un ressaut (23) adjacent à son extrémité libre (22) et en saillie vers l'extérieur du corps tubulaire (10) pour coopérer avec une surface de l'alésage (3), l'alésage comportant un renfoncement (9) pour accueillir le ressaut lorsque le corps tubulaire est dans sa position axiale prédéterminée.

4. Dispositif selon la revendication 3, **caractérisé en ce que** le ressaut (23) possède une surface radiale (24) formant un épaulement pour coopérer avec une surface radiale (25) correspondante du renfoncement (9) et s'opposer à un effort d'extraction du corps tubulaire (10) hors de l'alésage (3).

5. Dispositif selon la revendication 3 ou la revendication 4, **caractérisé en ce que** le renfoncement est formé par une lumière (9) débouchant à l'extérieur de l'élément (4) pour permettre un accès (3) au ressaut (23) depuis l'extérieur de l'élément.

6. Dispositif de raccordement selon la revendication 5, dans lequel le corps tubulaire (10) possède une extrémité (12), par laquelle il est destiné à être introduit dans l'alésage (3), qui est prolongée par au moins un élément d'étanchéité (15, 16) au moyen d'un support cylindrique (14) en saillie temporaire de cette extrémité, l'élément d'étanchéité étant agencé pour assurer, en service, l'étanchéité entre l'élément (4) et l'extrémité de conduite (1).

7. Dispositif selon la revendication 6, dans lequel le support cylindrique de l'élément d'étanchéité (15, 16) est formé d'une douille (14) reliée à l'extrémité précitée du corps tubulaire (10) par des moyens à rupture de manière à pouvoir s'effacer autour de cette extrémité du corps tubulaire au montage du corps tubulaire dans l'alésage de l'élément.

## Claims

1. A device for coupling a pipe end (1) to a bore (3) provided in a fluid transport circuit element (4), the device comprising a tubular body (10) defining an inner channel (11) for receiving the pipe end, retention means (17) for retaining the pipe end in a predetermined axial position in the inner channel, and fastener means (23) for fastening the tubular body in the bore in a predetermined axial position, the tubular body fastener means being separate from the pipe-end retention means, the device being **characterized in that** abutment means (22) for coming into abutment with the terminal face of the pipe end are mounted on the tubular body so as to be movable between a position in which they project into the inner channel so as to oppose entry of the pipe end as far as its predetermined axial position, and a retracted position so as to disengage the passage for the pipe end to go towards its predetermined axial position, and **in that** the abutment means (22) are arranged to co-operate with the circuit element in such a manner as to pass from their projecting position to their retracted position when the tubular body is pushed into the bore as far as its predetermined axial position.

2. A device according to claim 1, in which the abutment means comprise at least one tongue (20) having an end (21) connected to the tubular body (10) so as to be elastically deformable between a deformed state in which the tongue has a free end (22) projecting into the inner channel (11), and a rest state in which the tongue has its free end retracted.

3. A device according to claim 2, in which the tongue (20) is provided with a projection (23) adjacent to its free end (22) and projecting towards the outside of the tubular body (10) to co-operate with a surface of the bore (3), the bore having a setback (9) for receiving the projection when the tubular body is in its predetermined axial position.

4. A device according to claim 3, **characterized in that** the projection (23) possesses a radial surface (24) forming a shoulder for co-operating with a corresponding radial surface (25) of the setback (9) and opposing a force tending to extract the tubular body (10) from the bore (3).

5. A device according to claim 3 or claim 4, **characterized in that** the setback is formed by a slot (9) opening to the outside of the element (4) so as to give access to the projection (23) from outside the element.

6. A coupling device according to claim 5, in which the tubular body (10) possesses an end (12) for insertion into the bore (3), which end is extended by at least one seal (15, 16) by means of a cylindrical support (14) temporarily projecting from said end, the seal being arranged, in operation, to provide sealing between the circuit element (4) and the pipe end (1).

7. A device according to claim 6, in which the cylindrical support of the seal (15, 16) is formed by a bushing (14) connected to the above-mentioned end of the tubular body (10) by breakable means so as to be capable of retracting around said end of the tubular body when the tubular body is mounted in the bore of the circuit element.

## Patentansprüche

1. Vorrichtung zum Verbinden eines Leitungsendes (1) mit einer Bohrung (3), die in einem Fluidtransportkreiselement (4) ausgebildet ist, wobei die Vorrichtung umfasst: ein rohrförmiges Gehäuse (10), das einen Innenkanal (11) für die Aufnahme des Leitungsendes begrenzt, Mittel (17) zum Halten des Leitungsendes in einer vorgegebenen axialen Position in dem Innenkanal und Mittel (23) zum Befestigen des rohrförmigen Gehäuses in der Bohrung in einer vorgegebenen axialen Position, wobei die Mittel zum Befestigen des rohrförmigen Gehäuses getrennt von den Mitteln zum Halten des Leitungsendes sind, **dadurch gekennzeichnet, dass** Mittel (22) für den Anschlag der Endfläche des Leitungsendes so an dem rohrförmigen Gehäuse angebracht sind, dass sie zwischen einer Position, in der sie derart in den Innenkanal vorstehen, dass sie sich dem Eindrücken des Leitungsendes bis in seine vorgegebene axiale Position widersetzen, und einer Position beweglich sind, in der sie derart ausgerückt sind, dass sie den Durchtritt des Leitungsendes in seine vorgegebene axiale Position freigeben, und dass die Anschlagmittel (22) derart ausgebildet sind, dass sie so mit dem Element zusammenwirken, dass sie von ihrer vorstehenden Position in ihre ausgerückte Position übergehen, wenn das rohrförmige Gehäuse bis zu seiner vorgegebenen axialen Position in die Bohrung gedrückt wird.

2. Vorrichtung nach Anspruch 1, wobei die Anschlagmittel mindestens eine Lamelle (20) umfassen, die ein Ende (21) hat, das mit dem rohrförmigen Gehäuse (10) so verbunden ist, dass sie elastisch zwischen einem verformten Zustand, in dem ein freies Ende (22) der Lamelle in den Innenkanal (11) vorsteht, und einem Ruhezustand verformt werden kann, in dem das freie Ende der Lamelle ausgerückt ist.

3. Vorrichtung nach Anspruch 2, wobei die Lamelle (20) nahe ihrem freien Ende (22) mit einem Vorsprung (23) versehen ist, der zum Außenraum des rohrförmigen Gehäuses hin vorsteht, um mit einer Oberfläche der Bohrung (3) zusammenzuwirken, wobei die Bohrung eine Vertiefung (9) umfasst, um den Vorsprung aufzunehmen, wenn das rohrförmige Gehäuse in seiner vorgegebenen axialen Position ist.

4. Vorrichtung nach Anspruch 3, **dadurch gekennzeichnet, dass** der Vorsprung (23) eine radiale Oberfläche (24) hat, die eine Schulter bildet, die dazu bestimmt ist, mit einer entsprechenden radialen Oberfläche (25) der Vertiefung (9) zusammenzuwirken und sich einer Ausziehkraft des rohrförmigen Gehäuses (10) aus der Bohrung (3) zu widersetzen.

5. Vorrichtung nach Anspruch 3 oder Anspruch 4, **dadurch gekennzeichnet, dass** die Vertiefung von einem Schlitzloch (9) gebildet ist, das außen am Element (4) mündet, um einen Zugang (3) zum Vorsprung (23) von außerhalb des Elements zu ermöglichen.

6. Verbindungsvorrichtung nach Anspruch 5, wobei das rohrförmige Gehäuse (10) ein Ende (12) hat, mit dem es in die Bohrung (3) eingefügt werden soll und das durch mindestens ein Dichtungselement (15, 16) mit Hilfe eines zylindrischen Trägers (14) verlängert ist, der vorübergehend von diesem Ende absteht, wobei das Dichtungselement derart ausgebildet ist, dass es im Betrieb die Dichtheit zwischen dem Element (4) und dem Leitungsende (1) gewährleistet.

7. Vorrichtung nach Anspruch 6, wobei der zylindrische Träger für das Dichtungselement (15, 16) aus einer Hülse (14) gebildet ist, die mit dem vorgenannten Ende des rohrförmigen Gehäuses (10) derart über eine Sollbruchstelle verbunden ist, dass sie sich bei der Montage des rohrförmigen Gehäuses in der Bohrung des Elements auf dieses Ende des rohrförmigen Gehäuses schieben kann.
